Europäisches Patentamt

(19) European Patent Office

Office européen des brevets

(11) Veröffentlichungsnummer: **0 206 296**

**A1**

(12) # EUROPÄISCHE PATENTANMELDUNG

(21) Anmeldenummer: 86108483.8

(22) Anmeldetag: 20.06.86

(51) Int. Cl.⁴: **G01B 17/02**

(30) Priorität: 26.06.85 DE 3522893

(43) Veröffentlichungstag der Anmeldung:
30.12.86 Patentblatt 86/52

(84) Benannte Vertragsstaaten:
**AT BE CH DE FR GB IT LI LU NL SE**

(71) Anmelder: **Siemens Aktiengesellschaft Berlin und München**
**Wittelsbacherplatz 2**
**D-8000 München 2(DE)**

(72) Erfinder: **Baumann, Joachim, Dr., Dipl.-Phys.**
**Römerhofweg 51e**
**D-8046 Garching(DE)**
Erfinder: **Grad, Gerald**
**Autharistrasse 7**
**D-8000 München 90(DE)**
Erfinder: **Klofac, Pavel**
**Kölner Platz 6**
**D-8000 München 40(DE)**

(54) **Vorrichtung für die prozessintegrierte Prüfung von bewegtem zylindrischen Gut in der Prüfung.**

(57) Die Wanddicke von Rohren oder Mänteln bzw. Isolierungen bei Kabeln oder Leitungen läßt sich mit dem Ultraschall-Puls-Echo-Verfahren zerstörungsfrei und berührungslos messen. Bei der Prüfung am laufenden Gut in der Fertigungslinie besteht das technische Problem darin, daß durch laterale Bewegungen des Prüflings und Abweichungen von der idealen Zylindergeometrie eine korrekte Positionierung der Ultraschallsonden erschwert ist. Die Erfindung beinhaltet Vorrichtungen, die dazu dienen, die optimale geometrische Positionierung von Sonden, insbesondere Ultraschall-Sonden, und Prüfling in der Fertigungslinie von Rohren bzw. schichtartig aufgebauten Kabeln und Leitungen durchzuführen. Grundsätzlich gibt es zwei verschiedene Methoden: geeignete Zwangsführung des Prüflings bei starrer Sondenmontierung und Nachführung der Sonden bei freier Bewegung des Prüflings.

FIG 2

## Vorrichtung für die prozeßintegrierte Prüfung von bewegtem zylindrischen Gut in der Fertigung.

Die Erfindung betrifft eine Vorrichtung zur zerstörungsfreien und berührungslosen prozeßintegrierten Prüfung am laufenden Gut, zum Beispiel der Wanddicke von Kabeln, Leitungen oder Rohren, in der Fertigungslinie. Unter Prüfung ist zum Beispiel eine optische Oberflächenkontrolle, eine Ultraschall-Prüfung, eine Wirbelstrom-oder Röntgenprüfung oder eine ähnliche zerstörungsfreie Prüfmethode zu verstehen. Der Begriff Prüfung umfaßt darüber hinaus sowohl die qualitative Erkennung von Inhomogenitäten oder Unregelmäßigkeiten als auch die quantitative Erfassung von geometrischen, thermischen, elastischen oder sonstigen physikalischen Größen.

Die Wanddicke von Rohren oder Mänteln bzw. Isolierungen bei Kabeln oder Leitungen läßt sich mit dem Ultraschall-Puls-Echo-Verfahren zerstörungsfrei und berührungslos messen. Bei der Prüfung am laufenden Gut in der Fertigungslinie besteht das technische Problem darin, daß durch laterale Bewegungen des Prüflings und Abweichungen von der idealen Zylindergeometrie eine korrekte Positionierung der Ultraschall-Sonden erschwert ist.

Die bekannten Ultraschall-Wanddicken-Meßsysteme sind für Prüfgut, das aufgrund der Fertigungsbedingungen starke laterale Bewegungen ausführt oder Unrundheiten aufweist nur im beschränkten Umfang einsetzbar. Die Prüfkopfhalterung ist entweder starr oder mittenzentriert auf einer Kreisumlaufvorrichtung, wobei Seitenschwankungen oder Un rundheiten bei einem Teil der Systeme durch eine federnd gelagerte, - schleifend aufsitzende prismatische Führung der Prüfkopfhalterung in geringem Maße ausgeglichen werden können.

Der Erfindung liegt die Aufgabe zugrunde, die eingangs definierte Vorrichtung zu konzipieren, die dazu dient, die optimale geometrische Positionierung von Sonden, insbesondere Ultraschall-Sonden, und Prüfling in der Fertigungslinie von Rohren bzw. schichtartig aufgebauten Kabeln und Leitungen durchzuführen. Diese Aufgabe wird dadurch gelöst, daß der Prüfling bei lateral starrer Sondenmontierung mit einer oder mehreren Sonden einer Zwangsführung zur definierten Positionierung unterliegt bzw. daß bei freier Bewegung des Prüflings eine reitende Nachführung der Sonde bzw. Sonden zur definierten, relativen Positionierung zwischen Prüfsonde und Prüfgut erfolgt, wobei bei mehreren Sonden eine voneinander unabhängige Feinpositionierung vorgesehen ist. Selbstverständlich ist auch eine Kombination beider Methoden möglich.

Weitere Merkmale der Erfindung sind Gegenstand der Unteransprüche 3 bis 10.

Durch die Erfindung wird erreicht, daß durch optimale Positionierung von Prüfsonden und Prüfling mit hoher zeitlicher Ausbeute korrekte Meßwerte gewonnen werden können.

Die Erfindung wird anhand der Figuren erläutert. Es zeigen:

Figur 1 Zwangsführung eines Prüflings mit gegenübersteenden, festen Prüfsonden,

Figur 2 Nachführung der gegenüberstehenden Prüfsonden um lateral sich frei bewegenden Prüfling,

Figur 3 Möglichkeiten der Feinpositionierung der Prüfsonde gegenüber dem Prüfling und

Figur 4 ein Ausführungsbeispiel einer Feinpositionierung hinsichtlich des Prüfabstandes und des Kippwinkels.

In den Figuren ist mit 1 ein Prüfling bezeichnet, dem Prüfsonden 2, die vorzugsweise mit ihren Halterungen wegklappbar sind, gegenüberstehen. Zur Zwangsführung des Prüflings dienen geeignet positionierte Elemente 3, zum Beispiel Profilrollen, Walzen-oder Rollensätze, Gleitkufen, Führungsdüsen oder hydraulische Systeme, die zum Aufsetzen auf das Prüfgut vorzugsweise aufklappbar sind. Mit 4 sind starre Montagerahmen gekennzeichnet. Ferner ist eine Mittenanpassung an den Prüfgutdurchmesser vorgesehen, die aber nicht dargestellt ist.

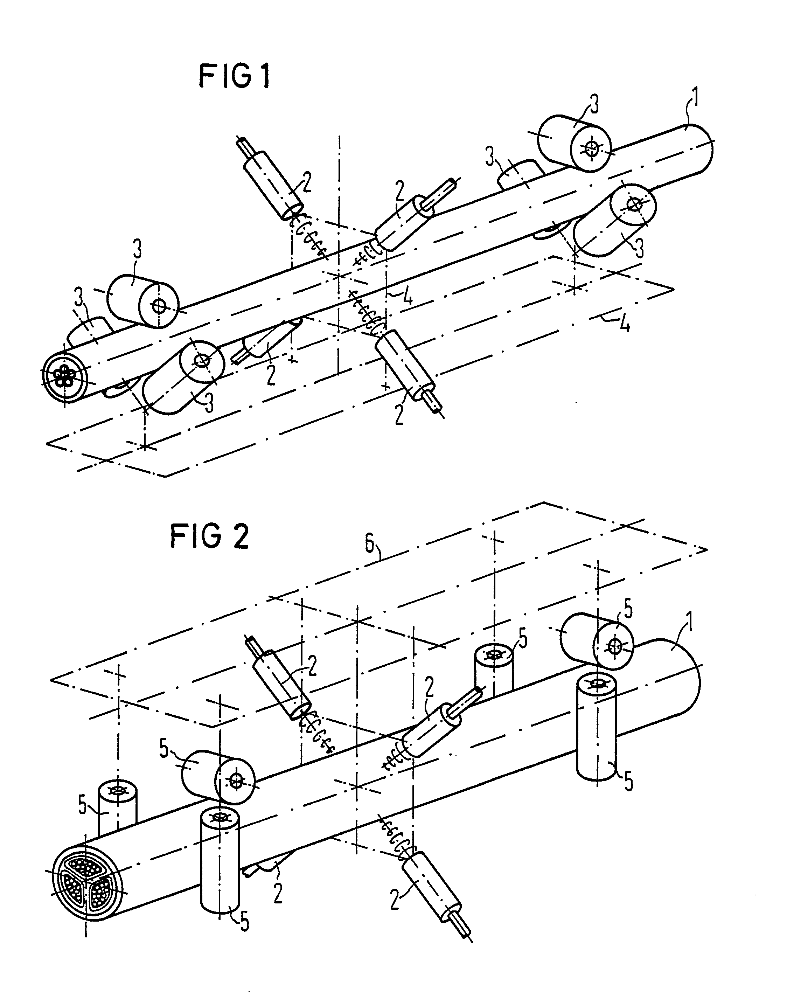

Das Bezugszeichen 5 in der Figur 2 kennzeichnet Elemente zur Nachführung eines Prüfwagens 6, der auf dem Prüfling 1 reitet. Nach der Darstellung in dieser Figur sind die Prüfsonden 2 am Prüfwagen 6 befestigt, der seinerseits an einem (hier nicht dargestellten) Gelenkarm gehalten ist.

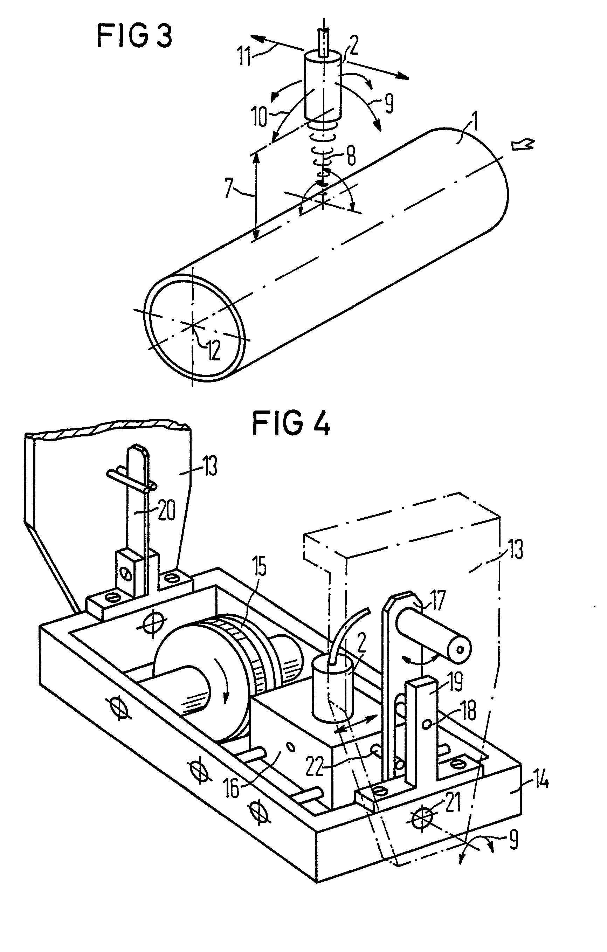

Aus der Figur 3 sind insbesondere die Freiheitsgrade der Positionierung zwischen Prüfsonde 2 und Prüfling 1 zu erkennen. Die Sonde 2 ist dabei in einem Prüfabstand 7 von der Oberfläche des Prüflings entfernt. Sie kann in Bezug auf die Oberflächennormale 8 einen Kippwinkel 9 und einen Nickwinkel 10 ausführen und außerdem eine Lateralbewegung 11 in Bezug auf den Mittelpunkt 12 des zylindrischen Prüflings 1 durchführen.

In der Figur 4 ist gestrichelt ein federndes Montageelement 13 angedeutet, das einen kippbaren Tragrahmen 14 mit dem in dieser Figur nicht dargestellten Prüfwagen 6 verbindet. In dem Tragrahmen ist eine Tastrolle 15 gelagert, die die Oberfläche des ebenfalls in dieser Figur nicht gezeigten Prüflings bezüglich Prüfabstand und Kippwinkel abfragt. Die Prüfsonde 2 sitzt auf einem Montagewürfel 16, der zusätzlich eine Lateralbewegung in Abhängigkeit des Kippwinkels ausführen kann. Ein Auslenkhebel 17 ist über einen Zapfen 18 mit einer Lasche 19 verbunden. Mit 20 ist eine Rückholfeder zwischen dem Montageelement 13 und dem kippbaren Rahmen 14 gekennzeichnet. Die Drehachse des Kipprahmens ist mit 21 beziffert. 22 ist ein Mitnehmerstift.

Die in der Figur 1 beispielsweise und -schematisch angedeutete Zwangsführung ist dann zweckmäßig, wenn schnelle Lateralbewegungen und Schwingungen des Prüflings vorliegen, wie sie etwa bei dünnen (bis ca. 20 mm ∅) und flexiblen Leitungen mit relativ hohen Abzugsgeschwindigkeiten (ca. 240 m/min) auftreten können. Die Elemente 3, die starr montiert sind, oder geeignete Gegenschwingungen einleiten, dämpfen am Ort der Ultraschallmessung Lateralbewegungen oder erzeugen einen Knotenpunkt der Schwingung.

Die Nachführung der Sonden, insbesondere Ultraschallsonden, wie sie schematisch in der Figur 2 angedeutet ist, bietet sich bei langsamer laufendem Meßgut an, vor allem bei dickeren und weniger flexiblen Kabeln. Hier würden bei einer Zwangsführung des Meßguts sehr große Kräfte auftreten. Die Nachführung der Sonden eröffnet auch weitere Möglichkeiten: Die Sonden können nicht nur seitliche Translationsbewegungen, sondern auch Kipp-und Nickbewegungen ausführen, um eine optimale Positionierung zum Prüfling einzunehmen. Diese Nachführung ist ferner für jede einzelne Sonde, die strahlenförmig rings um den Prüfling angeordnet sein können, unabhängig von den anderen möglich. Grundsätzlich gibt es für die Nachführungsvorrichtung zwei Möglichkeiten:

-die rein mechanische Nachführvorrichtung. Hier übernehmen Abtastelemente, wie Rollen oder Kufen, mittels einer Kraftübertragung die Zustellung der Sonden. Dieses System hat aufgrund der zu bewegenden Massen eine endliche Einstellzeit.

-Trennt man die Abtastelemente, die nun auch berührungslos (zum Beispiel optisch oder mittels Ultraschall) arbeiten können, das heißt die Sensoren von den Aktuatoren (elektrisch, pneumatisch oder hydraulisch betätigte Stellglieder) durch Einfügen eines elektronischen Regelkreises, sind erheblich kürzere Einstellzeiten realisierbar.

Zweck eines selbst nachlenkenden Sondenkopfes, insbesondere Ultraschall-Sondenkopfes, ist, daß bei Messungen an Prüflingen eines nicht idealen Kreisquerschnittes und bei begrenzten, transversalen Bewegungen des Prüflingsquerschnittes zur Transportrichtung durch geeignete "Abtastung" der Prüflingsoberfläche automatische Ausgleichsbewegungen der Sondenhalterung bewirkt werden, die ständig für ein weitgehend lotrechtes Auftreffen des UltraschallStrahles sorgen und die Sonde selbst auf konstantem Prüfabstand halten.

Ein oder auch mehrere -geeignet um den Prüflingsquerschnitt gruppierte -selbstnachlenkende Sondenköpfe sind grundsätzlich sowohl an Prüfeinrichtungen mit zwangsgeführtem Prüfmaterial als auch an sogenannten "reitenden" Einrichtungen einsetzbar und verbessern die Meßqualität gegenüber starren Sonden, insbesondere Ultraschallsonden.

Als Beispiel eines möglichen Aufbaues eines selbstnachlenkenden Sondenkopfes ist im folgenden das Prinzip einer rein mechanisch funktionierenden Ausführungsform, wie sie die Figur 4 zeigt, beschrieben.

Die Gesamtfunktionseinheit des selbstnachlenkenden Sonden kopfes 2 -montiert auf beispielsweise einem kleinen kippbaren Tragrahmen 14 - wird gefedert mit einer Tastrolle (Profilrad) 15 auf das durchlaufende Prüfgut 1 gedrückt, wobei das abrollende Rad 15 als "Abtastorgan" dient. Die Lauffläche dieses Abtastrades 15 ist im mittleren Bereich durch Ausdrehen zweigeteilt. Dieses Rad läuft auf einer Achse in einer Längshälfte des Durchbruches einer flachen, parallel und längs zur Prüfgutachse angeordneten Tragplatte - (Rechteckrahmen) 14. Dieser Rahmen ist mittig um seine Längsachse 21, das heißt also quer zur Prüfgutlängsachse, um zwei kurze Zapfen kippbar - (Kippwinkel 9).

Die Zapfen des Kipprahmens sind nahe den freien Enden eines mit seiner Öffnung zum Prüfling weisenden, U-förmigen Montagebügels gelagert. Die Rückseite des U-Montagebügels ist über eine gefederte Parallelführung mit der Montagegrundplatte der Funktionseinheit gekoppelt.

Die eigentliche Prüfsonde ist in einem kleinen Montagewürfel (Befestigungsblock) 16 fixiert, der seinerseits in der zweiten Längshälfte des Durchbruchs des vorgenannten Kipprahmens sitzt. Der feste Prüfabstand 7 wird über das Abtastrad 15 ständig beibehalten.

Wenn nun das Abtastrad -bedingt zum Beispiel durch eine plötzlich auftretende, schräg liegende Längsabplattung des Prüflings -beim Abrollen zwangsweise leicht seitlich wegkippt, so wird auch der Kipprahmen 14 mitgenommen und damit wiederum der Befestigungsblock 16 mit der Ultraschallsonde 2, so daß der Schallstrahl wieder senkrecht auftrifft.

Aufbaubedingt liegt die Drehachse 21 des Kipprahmens 14 ein Stück über der Prüfgut-Oberfläche. Somit entsteht beim Kippen des Schallstrahles auch ein geringes seitliches "Auswandern" desselben. Dies läßt sich jedoch korri gieren, indem man den Sonden-Befestigungsblock 16 quer zur Kipprahmenachse (auf Säulen) verschieblich anordnet und ihn an einem eingepreßten kleinen Zapfen (Mitnehmerstift) 18 von einem geschlitzten, am benachbarten U-Bügel-Schenkel gelagerten Hebel 17, der seinerseits durch einen Zwischenstift 22 am Kipprahmen bewegt wird, selbsttätig parallel in die Gegenrichtung auslenken läßt.

Die Tastrolle 15 ermittelt also den erforderlichen Prüfabstand und Kippwinkel. Der Kippwinkel stellt sich über die richtige Winkelauslenkung des kippbaren Tragrahmens 14 ein, wobei zusätzlich ein Parallaxenfehler der Prüfsonde durch eine geeignete Lateralverschiebung des Montagewürfels 16 für die Sonde korrigiert wird.

Bezugszeichenliste

   1 Prüfling
   2 Prüfsonden
   3 positionierte Elemente
   4 Montagerahmen
   5 Elemente zur Nachführung
   6 Prüfwagen
   7 Prüfabstand
   8 Oberflächennormale
   9 Kippwinkel
  10 Nickwinkel
  11 Lateralbewegung
  12 Mittelpunkt
  13 federndes Montageelement
  14 Kippbarer Tragrahmen
  15 Tastrolle
  16 Montagewürfel
  17 Auslenkhebel
  18 Zapfen
  19 Lasche
  20 Rückholfeder
  21 Drehachse des Kipprahmens
  22 Mitnehmerstift

**Ansprüche**

1. Vorrichtung zur zerstörungsfreien und berührungslosen, prozeßintegrierten Prüfung am laufenden Gut, zum Beispiel der Wanddicke von Kabeln, Leitungen oder Rohren, in der Fertigungslinie, **dadurch gekennzeichnet,** daß der Prüfling - (1) bei lateral starrer Sondenmontierung mit einer oder mehreren Sonden (2) einer Zwangsführung - (3) zur definierten Positionierung unterliegt (Figur 1).

2. Vorrichtung zur zerstörungsfreien und berührungslosen, prozeßintegrierten Prüfung am laufenden Gut, zum Beispiel der Wanddicke von Kabeln, Leitungen oder Rohren, in der Fertigungslinie, **dadurch gekennzeichnet,** daß bei freier Bewegung des Prüflings (1) eine reitende Nachführung der Sonde (2) bzw. Sonden zur definierten, relativen Positionierung zwischen Prüfsonde (2) und Prüfgut (1) erfolgt, wobei bei mehreren Sonden eine voneinander unabhängige Feinpositionierung vorgesehen ist (Figur 2).

3. Vorrichtung nach Anspruch 2, **dadurch gekennzeichnet,** daß die Prüfung mit Ultraschall durchgeführt wird.

4. Vorrichtung nach den Ansprüchen 1 und 2, **dadurch gekennzeichnet,** daß beim Auftreten von Abweichungen von der idealen Zylinderform des Prüflings (1) eine selbsttätige Feinpositionierung der Prüfsonde bzw. -Sonden vorgesehen ist (Figur 4).

5. Vorrichtung nach den Ansprüchen 1 und 2, **dadurch gekennzeichnet,** daß Mittel (3) vorgesehen sind, durch die die Zwangsführung eine Begrenzung der Lateralbewegung herbeiführt und daß durch die reitende Vorrichtung (6) die exakte Positionierung erfolgt (Figur 1 und 2).

6. Vorrichtung nach Anspruch 1, **dadurch gekennzeichnet,** daß die Zwangsführung geeignet positionierte Profilrollen (3), Walzen oder Rollensätze, Gleitkufen, Führungsdüsen oder hydraulische Systeme umfaßt, die starr montiert sind.

7. Vorrichtung nach Anspruch 6, **dadurch gekennzeichnet,** daß die Mittel (3) zur Zwangsführung beweglich geeignete Gegenschwingungen einleiten, Lateralbewegungen dämpfen bzw. einen Knotenpunkt der Schwingung erzeugen.

8. Vorrichtung nach Anspruch 2 und 4, **dadurch gekennzeichnet,** daß Abtastelemente - (5), wie Rollen oder Kufen, mittels einer Kraftübertragung die Zustellung der Sonden übernehmen.

9. Vorrichtung nach Anspruch 8, **dadurch gekennzeichnet,** daß Abtastelemente (5) (Sensoren) vorgesehen sind, die berührungslos (zum Beispiel optisch, mittels Staustrahldüsen oder Ultraschall arbeiten.

10. Vorrichtung nach Anspruch 9, **dadurch gekennzeichnet,** daß durch Einfügen eines elektronischen Regelkreises die Abtastelemente - (Sensoren) von den Aktuatoren (elektrisch, pneumatisch oder hydraulisch betätigte Stellglieder) getrennt sind.

11. Vorrichtung nach Anspruch 4, **dadurch gekennzeichnet,** daß die Feinpositionierung hinsichtlich Prüfabstand, Kippwinkel und gegebenenfalls Nickwinkel auf mechanische Art realisiert ist. (Figur 4).

FIG 1

FIG 2

**FIG 3**

**FIG 4**

| | Europäisches Patentamt | **EUROPÄISCHER RECHERCHENBERICHT** | Nummer der Anmeldung EP 86 10 8483 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 948 082 (ZUMBACH) <br><br> * Zusammenfassung; Spalte 3, Zeile 46 - Spalte 4, Zeile 33; Figur 7 * | 1,4,6, 7,9-11 | G 01 B 17/02 |
| | --- | | |
| X | US-A-3 916 676 (WESTERN ELECTRIC) <br> * Zusammenfassung; Figur 1 * | 1,3 | |
| | --- | | |
| X | PATENTS ABSTRACTS OF JAPAN, Band 7, Nr. 224,(P-227)[1369], 5. Oktober, 1983; & JP - A - 58 115 304 (SHOWA DENSEN DENRAN K.K.) 09.07.1983 <br> * Abstract * | 2 | |
| | --- | | RECHERCHIERTE SACHGEBIETE (Int. Cl.4) |
| A | FR-A-2 392 360 (NORTHERN TELECOM) <br> * Figuren 7,8; Seite 17; Patentanspruch 1 * | 2 | G 01 B |
| | --- | | |
| A | FR-A-1 264 345 (RHEINHAUSEN) | 2 | |
| | ----- | | |

Der vorliegende Recherchenbericht wurde für alle Patentansprüche erstellt.

| Recherchenort <br> DEN HAAG | Abschlußdatum der Recherche <br> 22-09-1986 | Prüfer <br> HOORNAERT W. |
|---|---|---|